(19) Europäisches Patentamt
European Patent Office
Office européen des brevets

(11) **EP 4 568 043 A1**

(12) **EUROPEAN PATENT APPLICATION**

(43) Date of publication:
**11.06.2025 Bulletin 2025/24**

(21) Application number: **23215072.2**

(22) Date of filing: **07.12.2023**

(51) International Patent Classification (IPC):
*H02J 1/10* (2006.01)      *H02J 7/00* (2006.01)
*H02M 1/00* (2006.01)

(52) Cooperative Patent Classification (CPC):
**H02J 1/102; H02J 1/106; H02J 7/0013;
H02J 7/0063; H02J 7/00712; H02M 1/0022;
H02M 1/0025; H02M 1/007**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Danfoss A/S
6430 Nordborg (DK)**

(72) Inventors:
• **LANA, Andrey**
  **53600 Lappeenranta (FI)**
• **AHLGREN, Tommi**
  **53600 Lappeenranta (FI)**
• **PAAKKUNAINEN, Jussi**
  **53600 Lappeenranta (FI)**

(74) Representative: **Väänänen, Janne Kalervo
Vanarix Oy
Laaksolahdentie 74
02730 Espoo (FI)**

(54) **A CONTROL SYSTEM AND A METHOD FOR CONTROLLING DIRECT VOLTAGE CONVERTERS**

(57)     A control system for controlling direct voltage converters whose first direct voltage terminals are connected to energy storages comprises a data processing system (105-107) configured to compute a target value ($V_{target}$) as a linear combination of direct voltages ($V_{ESS\_1}, \ldots, V_{ESS\_N}$) of the first direct voltage terminals of the direct voltage converters, to form, for each direct voltage converter, a correction value ($V_{ref\_offset\_n}$) based on the target value ($V_{target}$) and the direct voltage ($V_{ESS\_n}$) of the first direct voltage terminal of the direct voltage converter, and to control power of each direct voltage converter based on: a reference value ($U_{DC\_ref}$) of direct voltage of a second direct voltage terminal of the direct voltage converter, the direct voltage ($U_{DC}$) of the second direct voltage terminal, and the correction value of the direct voltage converter to drive the direct voltages of the first direct voltage terminals of the direct voltage converters to a same value.

Figure 1a

## Description

### Field of the disclosure

The disclosure relates generally to control of direct voltage converters which constitute a part of an energy storage system. More particularly, the disclosure relates to a control system and to a method for controlling direct voltage converters connected to energy storages such as battery units. Furthermore, the disclosure relates to a direct voltage converter. Furthermore, the disclosure relates to a computer program for controlling direct voltage converters connected to energy storages.

### Background

In many cases, a direct current "DC" system comprises energy storages, such as battery units, and direct voltage converters configured to convert direct voltage of each energy storage into desired direct voltage of the DC system. In some DC systems, charging of the energy storages can be carried out with the aid of the above-mentioned direct voltage converters so that each direct voltage converter converts direct voltage of an energy source providing charging energy into direct voltage suitable for charging the corresponding energy storage. This approach, however, requires that the above-mentioned direct voltage converters are capable of transferring energy in two directions, i.e. to the energy storages and from the energy storages. Furthermore, power transfer capacities of the direct voltage converters may limit the charging power and thereby increase a time needed for the charging. Yet furthermore, energy losses taking place in the direct voltage converters reduce the efficiency of the charging. Therefore, in many cases, it is desirable that the energy storages can be charged simultaneously from a direct voltage source so that the energy storages are charged directly, i.e. without energy storage -specific voltage conversions, from a common direct voltage bus or the like.

The above-mentioned charging from a common direct voltage bus or the like is however not free from challenges because direct voltages of the energy storages must be equal to each other to enable simultaneous charging from the common direct voltage bus or the like without energy storage -specific voltage conversions. Therefore, there is a need to control the direct voltage converters during use of the DC system so that the direct voltages of the energy storages are kept equal to each other while keeping the direct voltage of the DC system at a desired value.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments.

In accordance with the invention, there is provided a new control system for controlling direct voltage converters whose first direct voltage terminals are connected to energy storages, such as battery units.

A control system according to the invention comprises a data processing system configured to:

- compute a target value as a linear combination of values of direct voltages of the first direct voltage terminals of the direct voltage converters,

- form, for each of the direct voltage converters, a correction value based on the target value and the value of the direct voltage of the first direct voltage terminal of the direct voltage converter, and

- control power transfer of each of the direct voltage converters based on: i) a reference value of direct voltage of a second direct voltage terminal of the direct voltage converter, ii) an actual value of the direct voltage of the second direct voltage terminal of the direct voltage converter, and iii) the correction value of the direct voltage converter to drive the direct voltages of the first direct voltage terminals of the direct voltage converters to a same value.

The use of the correction value in addition to the actual and reference values of the direct voltage of the second direct voltage terminal of each direct voltage converter drives the direct voltages of the energy storages to a same value. This, in turn, makes it possible to charge the energy storages simultaneously from a common direct voltage bus or the like without energy storage -specific voltage conversions.

In accordance with the invention, there is also provided a new electric power system that comprises:

- energy storages,

- direct voltage converters whose first direct voltage terminals are connected to the energy storages, and

- a control system according to the invention and configured to control power transfer of each of the direct voltage converters to drive direct voltages of the first direct voltage terminals of the direct voltage converters to a same value.

The electric power system can be for example an electric power system of a ship or another vessel, or an electric power system of a vehicle or a mobile working machine.

In accordance with the invention, there is also provided a new direct voltage converter that comprises:

- a first direct voltage terminal, a second direct voltage terminal, and a converter stage between first and second direct voltage terminals,

- a driver stage configured to control the converter stage, and

- a data processor configured to:

  - receive, from a data transfer network, first data indicative of one or more direct voltages related to one or more other direct voltage converters,

  - transmit, to the data transfer network, second data indicative of direct voltage of the first direct voltage terminal,

  - compute a target value as a linear combination of the value of the direct voltage of the first direct voltage terminal and one or more values of the one or more direct voltages indicated by the second data, and

  - form a correction value based on the target value and the value of the direct voltage of the first direct voltage terminal, and

  - control power transfer of the converter stage based on: i) a reference value of direct voltage of the second direct voltage terminal, an actual value of the direct voltage of the second direct voltage terminal, and the correction value to drive the direct voltage of the first direct voltage terminal and the one or more direct voltages indicated by the second data to a same value.

In accordance with the invention, there is also provided a new method for controlling direct voltage converters whose first direct voltage terminals are connected to energy storages. A method according to the invention comprises:

- computing a target value as a linear combination of values of direct voltages of the first direct voltage terminals of the direct voltage converters,

- forming, for each of the direct voltage converters, a correction value based on the target value and the value of the direct voltage of the first direct voltage terminal of the direct voltage converter, and

- controlling power transfer of each of the direct voltage converters based on: i) a reference value of direct voltage of a second direct voltage terminal of the direct voltage converter, ii) an actual value of the direct voltage of the second direct voltage terminal of the direct voltage converter, and iii) the correction value of the direct voltage converter to drive the direct voltages of the first direct voltage terminals of the direct voltage converters to a same value.

In accordance with the invention, there is also provided a new computer program for controlling direct voltage converters whose first direct voltage terminals are connected to energy storages. A computer program according to the invention comprises computer executable instructions for controlling a programmable processing system to:

- compute a target value as a linear combination of values of direct voltages of the first direct voltage terminals of the direct voltage converters,

- form, for each of the direct voltage converters, a correction value based on the target value and the value of the direct voltage of the first direct voltage terminal of the direct voltage converter, and

- control power transfer of each of the direct voltage converters based on: i) a reference value of direct voltage of a second direct voltage terminal of the direct voltage converter, ii) an actual value of the direct voltage of the second direct voltage terminal of the direct voltage converter, and iii) the correction value of the direct voltage converter to drive the direct voltages of the first direct voltage terminals of the direct voltage converters to a same value.

In accordance with the invention, there is also provided a new computer program product. The computer program product comprises a non-volatile computer readable medium, e.g. a compact disc "CD", encoded with a computer program according to the invention.

Various exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features.

The features recited in dependent claims are mutually freely combinable unless otherwise explicitly stated.

Furthermore, it is to be understood that the use of "a" or "an", i.e. a singular form, throughout this document does not exclude a plurality.

## Brief description of figures

Exemplifying and non-limiting embodiments and their advantages are explained in greater detail below in the sense of examples and with reference to the accompanying drawings, in which:

figure 1a illustrates an electric power system that comprises a control system according to an exemplifying and non-limiting embodiment for controlling direct voltage converters of the electric power system,

figure 1b illustrates a functional block diagram of a part of the control system configured to control $n^{th}$ one of the direct voltage converters of the electric power system illustrated in figure 1a,

figure 2 illustrates an electric power system that comprises a control system according to an exemplifying and non-limiting embodiment for controlling direct voltage converters of the electric power system, and

figure 3 shows a flowchart of a method according to an exemplifying and non-limiting embodiment for controlling direct voltage converters whose first direct voltage terminals are connected to energy storages.

## Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

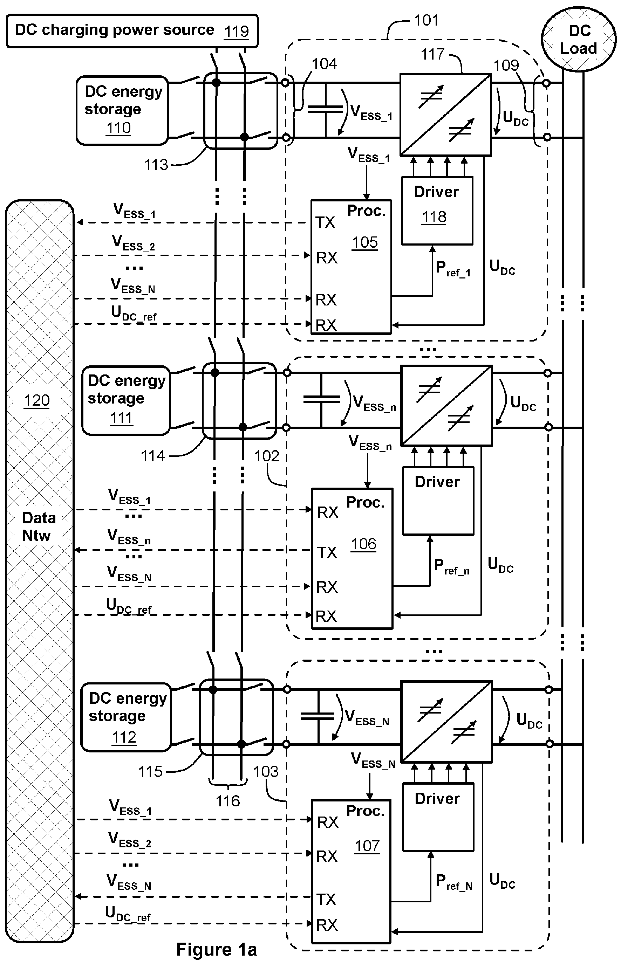

Figure 1a illustrates an electric power system according to an exemplifying and non-limiting embodiment. The electric power system comprises direct voltage converters whose first direct voltage terminals are connected to energy storages, such as battery units. In figure 1a, three of the direct voltage converters are denoted with references 101, 102, and 103 and three of the energy storages are denoted with references 110, 111, and 112. The first direct voltage terminal of the direct voltage converter 101 is denoted with a reference 104. In this exemplifying case, each of the direct voltage converters is configured to transfer electric energy from the respective energy storage to a direct current "DC" load.

Each of the direct voltage converters comprises a converter stage configured to convert direct voltage $V_{ESS\_1}$, ..., or $V_{ESS\_N}$ of the respective energy storage into direct voltage of a second direct voltage terminal of the direct voltage converter. In figure 1a, the second direct voltage terminal of the direct voltage converter 101 is denoted with a reference 109. In the exemplifying electric power system illustrated in figure 1a, the second direct voltage terminals of the direct voltage converters are connected to each other and thus the second direct voltage terminals of the direct voltage converters have the same voltage $U_{DC}$. The converter stage of each of the direct voltage converters can be e.g. step-down and/or step-up forward or flyback converter stage implemented with controllable semiconductor components such as e.g. insulated gate bipolar transistors "IGBT" or gate turn off "GTO" thyristors, and with one or more inductive elements, one or more capacitive elements, and possibly with diodes.

Each of the direct voltage converters comprises a driver stage configured to control the controllable semiconductor components of the converter stage to convert the direct voltage $V_{ESS\_1}$, ..., or $V_{ESS\_N}$ of the respective energy storage into the direct voltage $U_{DC}$. In figure 1a, the driver stage of the direct voltage converter 101 is denoted with a reference 118.

The electric power system comprises a control system according to an exemplifying and non-limiting embodiment. The control system comprises a data processing system configured to control power transfer of each of the direct voltage converters. In the exemplifying electric power system illustrated in figure 1a, the data processing system is constituted by data processors of the direct voltage converters. In figure 1a, the data processors of the direct voltage converters 101, 102, and 103 are denoted with references 105, 106, and 107. The data processors of the direct voltage converters are communicatively connected to each other via a data transfer network 120 that can be e.g. a field bus.

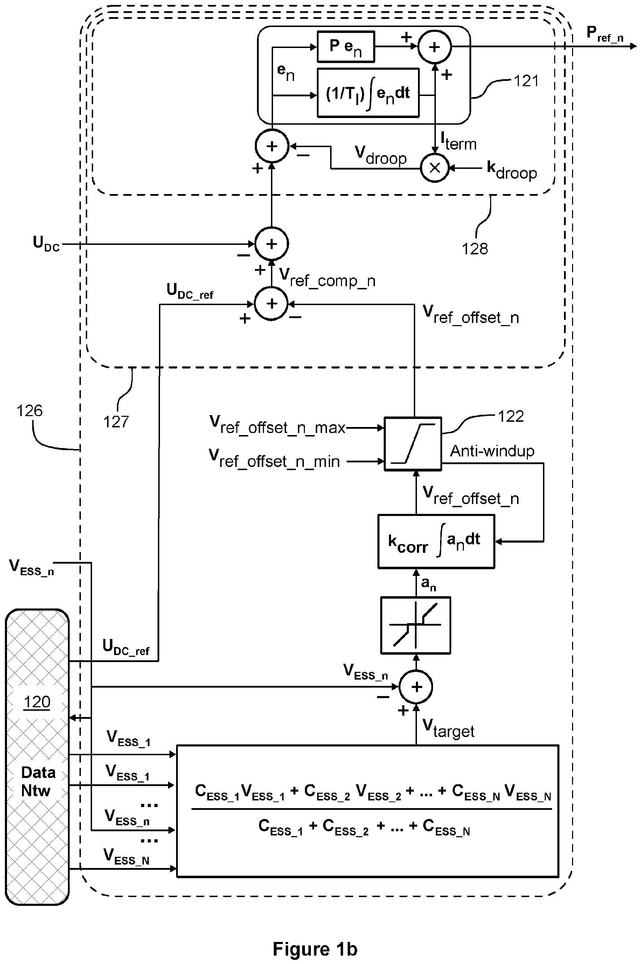

Figure 1b illustrates a functional block diagram of a part of the control system that determines a power reference $P_{ref\_n}$ for the direct voltage converter 102 which is the $n^{th}$ one of the direct voltage converters of the electric power system. The functionality that is inside a block 126 can be implemented with the data processor 106. Without limiting the generality, the considerations below can be limited to the data processor 106 only, because the data processors of the other direct voltage converters can be configured to implement the same functionality for determining the power references $P_{ref\_1}$, ..., $P_{ref\_n-1}$, $P_{ref\_n+1}$, ..., and $P_{ref\_N}$ for the other direct voltage converters.

The data processor 106 comprises a first data interface RX configured to receive, from the data transfer network 120, first data indicative of direct voltages $V_{ESS\_1}$, ..., $V_{ESS\_n-1}$, $V_{ESS\_n+1}$, ..., and $V_{ESS\_N}$ of the first direct voltage terminals of the other direct voltage converters of the electric power system, i.e. the direct voltages of the energy storages connected to the other direct voltage converters. Furthermore, the data processor 106 comprises a second data interface TX configured to transmit second data indicative of the direct voltage $V_{ESS\_n}$ of the first direct voltage terminal of the direct voltage converter 102 to the other direct voltage converters via the data transfer network 120.

The data processor 106 is configured to compute a target value $V_{target}$ as a linear combination of the values of the direct voltages $V_{ESS\_1}$, $V_{ESS\_2}$, ..., and $V_{ESS\_N}$. In the exemplifying case illustrated in figure 1b, the data processor 106 is configured to compute the target value ($V_{target}$) according to the following formula:

$$V_{target} = (1/C_{sum}) \sum_{i=1...N} (C_{ESS\_i} V_{ESS\_i}), \qquad (1)$$

where N is the number of the direct voltage converters in the electric power system, $C_{ESS\_i}$ is an energy storage capacity of the energy storage connected to $i^{th}$ one of the direct voltage converters, and $C_{sum}$ is a sum of the energy storage capacities of the energy storages i.e. $C_{ESS\_1} + C_{ESS\_2} + ... + C_{ESS\_N}$. The energy storage capacity of each energy storage can be expressed e.g. in kilowatt-hours "kWh". For another example, the target value $V_{target}$ can be an arithmetic average of the values of the direct voltages $V_{ESS\_1}$, ..., $VESS\_N$.

The data processor 106 is configured to form a correction value $V_{ref\_offset\_n}$ based on a difference $V_{target} - V_{Ess\_n}$ between the target value $V_{target}$ and the value of the direct voltage $V_{ESS\_n}$. As indicated by figure 1b, a positive value of the difference $V_{target} - V_{ESS\_n}$, i.e. $V_{ESS\_n} < V_{target}$, tends to decrease the power reference $P_{ref\_n}$, whereas a negative value of the difference $V_{target} - V_{ESS\_n}$, i.e. $V_{ESS\_n} > V_{target}$, tends to increase the power reference $P_{ref\_n}$. Therefore, the power balancing between the direct voltage converters and thereby the power balancing between the energy storages is adjusted so that the direct voltages $V_{ESS\_1}$, ..., $V_{ESS\_N}$ of the direct voltage converters are driven to a same value.

In a control system according to an exemplifying and non-limiting embodiment, the data processor 106 is configured to form the correction value $V_{ref\_offset\_n}$ as a time integral of an auxiliary variable $a_n$ that is dependent on the above-mentioned difference $V_{target} - V_{ESS\_n}$. In the exemplifying case illustrated in figure 1b, the time integral is multiplied with a correction coefficient $k_{corr}$ that can be for example in the range from 0.01 to 0.1, e.g. 0.05.

In a control system according to an exemplifying and non-limiting embodiment, the data processor 106 is configured to form the auxiliary variable $a_n$ so that the auxiliary variable $a_n$ is the above-mentioned difference $V_{target} - V_{ESS\_n}$ if the absolute value of the difference exceeds a predetermined limit, and otherwise the auxiliary variable $a_n$ is zero. Thus, there is a dead zone on which the difference $V_{target} - V_{ESS\_n}$ does not affect the power reference $P_{ref\_n}$.

In a control system according to an exemplifying and non-limiting embodiment, the data processor 106 is configured to limit the correction value $V_{ref\_offset\_n}$ to be at least a predetermined lower limit value $V_{ref\_offset\_n\_min}$ and at most a predetermined upper limit value $V_{ref\_offset\_n\_max}$. In figure 1b, the limitation of the correction value $\Delta f_{droo,corr}$ is depicted with a limiter block 122. The data processor 106 is advantageously configured to implement an anti-windup functionality that prevents the absolute value of the time integral of the auxiliary variable $a_n$ from increasing in response to a situation in which the correction value $V_{ref\_offset\_n}$ reaches the above-mentioned upper limit value $V_{ref\_offset\_n\_max}$ or the above-mentioned lower limit value $V_{ref\_offset\_n\_min}$.

In a control system according to an exemplifying and non-limiting embodiment, the data processor 106 is configured to constitute a proportional and integrative "PI" controller 121 configured to form the power reference $P_{ref\_n}$ based on an error variable $e_n$ dependent on a difference $U_{DC\_ref} - (U_{DC} + V_{ref\_offset\_n})$ between the reference value $U_{DC\_ref}$ and a sum of the correction value $V_{ref\_offset\_n}$ and the actual value of the direct voltage $U_{DC}$.

In a control system according to an exemplifying and non-limiting embodiment, the data processor 106 is configured to form a voltage droop value $V_{droop}$ based on a time integral term $I_{term}$ of the proportional and integrative controller 121. The data processor 106 is configured to change the error variable $e_n$ by the voltage droop value $V_{droop}$ so that the voltage droop value $V_{droop}$ decreases the power reference $P_{ref\_n}$ when the time integral term $I_{tem}$ increases the

power reference $P_{ref\_n}$. The drooping coefficient $k_{droop}$ that can be for example in the range from 0.01 to 0.1, e.g. 0.05.

In a control system according to an exemplifying and non-limiting embodiment, the data processor 106 is configured to constitute a current controller configured to control current of the direct voltage converter 102 to drive the power transfer of the direct voltage converter 102 towards the power reference $P_{ref\_n}$. The current controller is not shown in figure 1b.

The control system illustrated in figure 1b can be deemed to have two control loops. An inner control loop for controlling the power transfer based on the actual and reference values of the direct voltage $U_{DC}$, and an outer control loop for supplying the correction value $V_{ref\_offset\_n}$ to the inner control loop to drive the direct voltages $V_{ESS\_1}$, ..., $V_{ESS\_N}$ to a same value.

The implementation of each of the data processors of the direct voltage converters, e.g. the data processors 105-107, can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor may comprise one or more memory circuits each of which can be for example a random-access memory "RAM" circuit.

The exemplifying electric power system illustrated in figure 1a comprises a switching system suitable for connecting each of the energy storages 110-112 to a direct voltage bus 116 for charging the energy storages from a DC charging power source 119 so that flow paths of energy from the DC charging power source 119 to the energy storages are free from the direct voltage converters 101-103. In this exemplifying case, the energy storages are connected in parallel with each other when being connected to the direct voltage bus 116. The switching system for charging the energy storages 110-112 comprises switch units three of which are denoted with references 110, 111, and 112 in figure 1a. Each of the energy storages comprises advantageously a limiting resistor for limiting current peaks at a beginning of a charging period and a switch arrangement for bypassing the limiting resistor. The limiting resistors of the energy storages are not shown in figure 1a. The DC charging power source 119 can be for example an onshore combined charging system "CCS" charger for charging on-board battery systems of ships and/or other vessels.

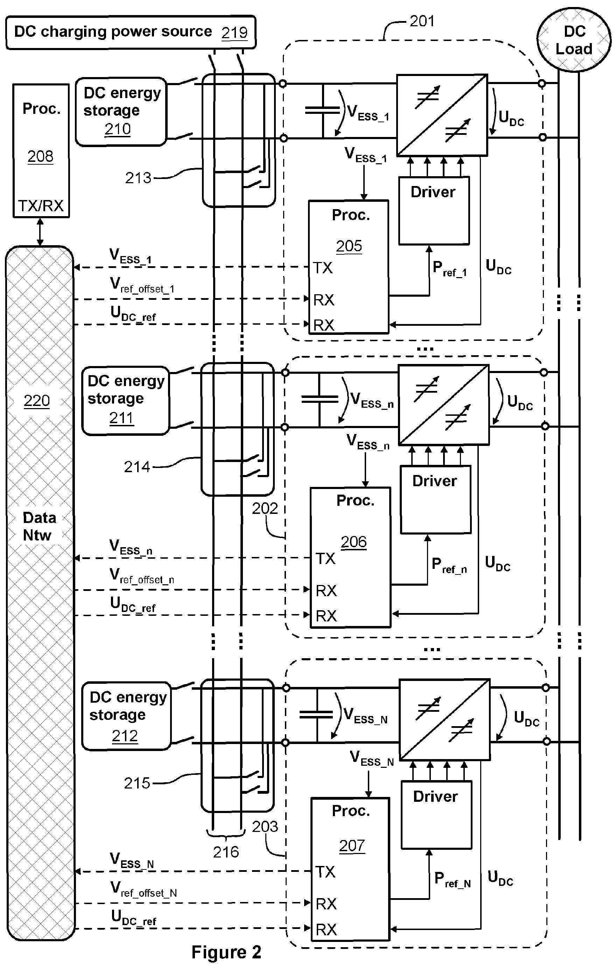

The exemplifying control system illustrated in figure 1a has a distributed architecture so that the data processing system is implemented with the data processors of the direct voltage converters, such as the data processors 105-107. Figure 2 illustrates an electric power system that comprises a control system according to another exemplifying and non-limiting embodiment. The electric power system comprises direct voltage converters three of which are denoted with references 201, 202, and 203. In this exemplifying case, each of the power converters is configured to transfer electric power from an energy storage to a direct current "DC" load. In figure 2, three of the energy storages are denoted with references 210, 211, and 212. The control system comprises a data processing system configured to determine power references $P_{ref\_1}$, ..., $P_{ref\_N}$ for the direct voltage converters. In this exemplifying case, a part of the data processing system has a centralized architecture so that the data processing system comprises a data processor 208 that is configured to determine the correction values $V_{ref\_offset\_1}$, ..., $V_{ref\_offset\_N}$ for all the direct voltage converters. Furthermore, the control system comprises a data transfer network 220 configured to transfer the correction values $V_{ref\_offset\_1}$, ..., $V_{ref\_offset\_N}$ from the data processor 208 to the respective direct voltage converters, to transfer data indicative of the reference value $U_{DC\_ref}$ to the direct voltage converters, and to transfer data indicative of the direct voltages $V_{ESS\_1}$, ..., $V_{ESS\_N}$ from the direct voltage converters to the data processor 208. The data processor 208 can be configured to determine the correction values $V_{ref\_offset\_1}$, ..., $V_{ref\_offset\_N}$ for example in the way illustrated in figure 1b. Furthermore, the control system comprises data processors of the direct voltage converters so that the functionality that is inside a block 127 in figure 1b is implemented with the data processors of the direct voltage converters. In figure 2, three of the data processors of the direct voltage converters are denoted with references 205, 206, and 207. It is also possible that only the controller 121 and the voltage drooping, i.e. the functionalities that are inside a block 128 in figure 1b, are implemented with the data processors of the direct voltage converters. In this exemplifying case, differences $V_{ref\_comp\_1} - U_{DC}$, ..., $V_{ref\_comp\_N} - U_{DC}$ are transferred from the data processor 208 to the appropriate direct voltage converters. As shown by the above-presented examples, control systems according to exemplifying and non-limiting embodiments can be implemented according to various implementation architectures.

The implementation of the data processor 208 shown in figure 2 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor 208 may comprise one or more memory circuits each of which can be for example a random-access memory "RAM" circuit.

The exemplifying electric power system illustrated in figure 2 comprises a switching system suitable for connecting each of the energy storages 210-212 to a direct voltage bus 216 for charging the energy storages from a DC charging power source 219 so that flow paths of energy from the DC charging power source 219 to the energy storages are free from the direct voltage converters 201-203. In this exemplifying case, the energy storages are connected in parallel with each other when being connected to the direct voltage bus 216. The switching system for charging the energy storages 210-212 comprises switch units three of which are denoted with references 210, 211, and 212 in figure 1a. Each of the energy storages comprises advantageously a limiting resistor for limiting current peaks at a beginning of a charging period and a switch arrangement for bypassing the limiting resistor. The limiting resistors of the energy storages are not shown in figure 2. The DC charging power source 219 can be for example an onshore combined charging system "CCS" charger for charging on-board battery systems of ships and/or other vessels.

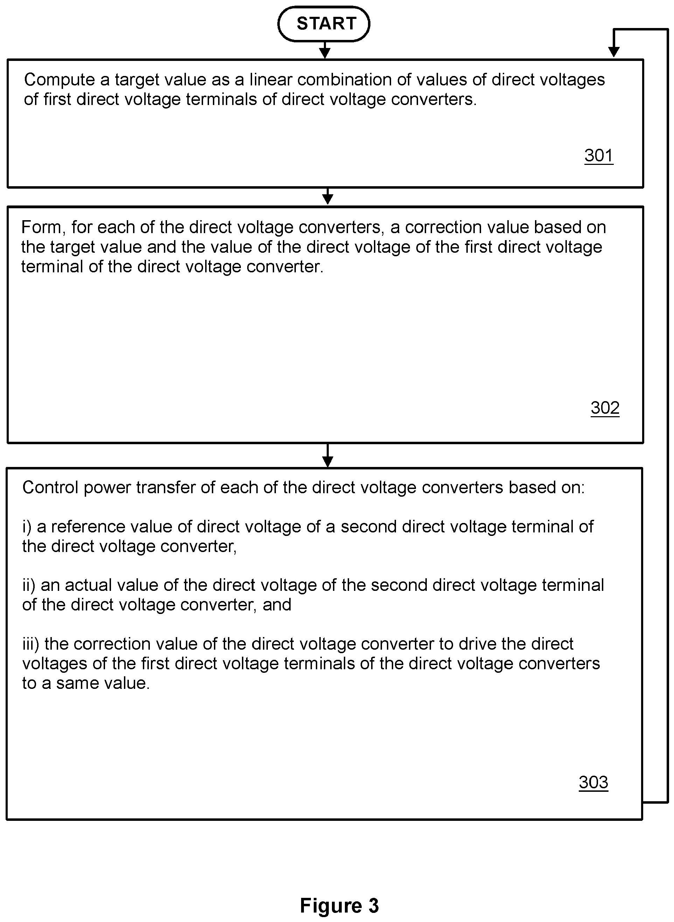

Figure 3 shows a flowchart of a method according to an exemplifying and non-limiting embodiment for controlling direct voltage converters whose first direct voltage terminals are connected to energy storages. The method comprises the following actions:

- action 301: computing a target value $V_{target}$ as a linear combination of values of direct voltages $V_{ESS\_1}$, ..., $V_{ESS\_N}$ of the first direct voltage terminals of the direct voltage converters,

- action 302: forming, for each of the direct voltage converters, a correction value $V_{ref\_offset\_n}$ based on the target value and the value of the direct voltage of the first direct voltage terminal of the direct voltage converter, and

- action 303: controlling power transfer of each of the direct voltage converters based on: i) a reference value $U_{DC\_ref}$ of direct voltage of a second direct voltage terminal of the direct voltage converter, ii) an actual value of the direct voltage $U_{DC}$ of the second direct voltage terminal of the direct voltage converter, and iii) the correction value $V_{ref\_offset\_n}$ of the direct voltage converter to drive the direct voltages of the first direct voltage terminals of the direct voltage converters to a same value.

In a method according to an exemplifying and non-limiting embodiment, the target value $V_{target}$ is computed as an arithmetic average of the values of the direct voltages $V_{ESS\_1}$, ..., $V_{ESS\_N}$ of the first direct voltage terminals of the direct voltage converters.

In a method according to an exemplifying and non-limiting embodiment, the target value $V_{target}$ is computed according to the following formula:

$$V_{target} = (1/C_{sum}) \sum_{i=1...N} (C_{ESS\_i} V_{ESS\_i}),$$

where N is the number of the direct voltage converters, $C_{ESS\_i}$ is an energy storage capacity of the energy storage connected to i$^{th}$ one of the direct voltage converters, $C_{sum}$ is a sum of the energy storage capacities of the energy storages.

A method according to an exemplifying and non-limiting embodiment comprises forming, for each of the direct voltage converters, the correction value $V_{ref\_offset\_n}$ based on an auxiliary variable $a_n$ dependent on a difference $V_{target} - V_{ESS\_n}$ between the target value $V_{target}$ and the value of the direct voltage $V_{ESS\_n}$ of the first direct voltage terminal of the direct voltage converter under consideration.

A method according to an exemplifying and non-limiting embodiment comprises forming the auxiliary variable $a_n$ so that the auxiliary variable $a_n$ is the difference $V_{target} - V_{ESS\_n}$ between the target value $V_{target}$ and the value of the direct voltage $V_{ESS\_n}$ of the first direct voltage terminal of the direct voltage converter if the absolute value of the difference exceeds a predetermined limit, and otherwise the auxiliary variable $a_n$ is zero.

A method according to an exemplifying and non-limiting embodiment comprises forming, for each of the direct voltage converters, the correction value $V_{ref\_offset\_n}$ based on a time integral of the auxiliary variable $a_n$. A method according to an exemplifying and non-limiting embodiment comprises limiting the time integral of the auxiliary variable $a_n$ to be at most a predetermined upper limit value and at least a predetermined lower limit value.

A method according to an exemplifying and non-limiting embodiment comprises controlling the power transfer of each of the direct voltage converters with a proportional and integrative "PI" controller that controls the power transfer of the direct voltage converter based on an error variable $e_n$ dependent on a difference $U_{DC\_ref} - (U_{DC} + V_{ref\_offset\_n})$ between the reference value $U_{DC\_ref}$ and a sum of the correction value $V_{ref\_offset\_n}$ and the actual value of the direct voltage $U_{DC}$ of the second direct voltage terminal of the direct voltage converter.

A method according to an exemplifying and non-limiting embodiment comprises forming a voltage droop value $V_{droop}$ based on a time integral term $I_{term}$ of the above-mentioned proportional and integrative controller, and to change the error variable $e_n$ by the voltage droop value $V_{droop}$ so that the voltage droop value $V_{droop}$ decreases the power transfer from the first direct voltage terminal to the second direct voltage terminal when the time integral term contributes the power transfer from the first direct voltage terminal to the second direct voltage terminal.

A method according to an exemplifying and non-limiting embodiment comprises forming, for each of the direct voltage converters, a power reference $P_{ref}$ based on the reference value $U_{DC\_ref}$, the actual value of the direct voltage $U_{DC}$ of the second direct voltage terminal, and the correction value $V_{ref\_offset\_n}$, and to control current of the direct voltage converter to drive the power transfer of the direct voltage converter to the power reference $P_{ref}$.

A computer program according to an exemplifying and non-limiting embodiment comprises computer executable instructions for controlling a programmable data processing system to carry out actions related to a method according to any of the above-described exemplifying and non-limiting embodiments.

A computer program according to an exemplifying and non-limiting embodiment comprises software modules for controlling direct voltage converters whose first direct voltage terminals are connected to energy storages. The software modules comprise computer executable instructions for controlling a programmable data processing system to:

- compute a target value as a linear combination of values of direct voltages of the first direct voltage terminals of the direct voltage converters,

- form, for each of the direct voltage converters, a correction value based on the target value and the value of the direct voltage of the first direct voltage terminal of the direct voltage converter, and

- control power transfer of each of the direct voltage converters based on: i) a reference value of direct voltage of a second direct voltage terminal of the direct voltage converter, ii) an actual value of the direct voltage of the second direct voltage terminal of the direct voltage converter, and iii) the correction value of the direct voltage converter to drive the direct voltages of the first direct voltage terminals of the direct voltage converters to a same value.

The software modules can be for example subroutines or functions implemented with programming tools suitable for the programmable data processing system.

A computer program product according to an exemplifying and non-limiting embodiment comprises a computer readable medium, e.g. a compact disc "CD", encoded with a computer program according to an exemplifying embodiment of invention.

A non-volatile computer readable medium according to an exemplifying and non-limiting embodiment is encoded with a computer program according to an exemplifying embodiment of invention.

A signal according to an exemplifying and non-limiting embodiment is encoded to carry information defining a computer program according to an exemplifying embodiment of invention.

The specific examples provided in the description given above should not be construed as limiting the scope and/or the applicability of the appended claims. Lists and groups of examples provided in the description given above are not exhaustive unless otherwise explicitly stated.

**Claims**

1. A control system for controlling direct voltage converters (101-103, 201-203) whose first direct voltage terminals (104, 204) are connected to energy storages, the control system comprising a data processing system (105-107, 205-208) configured to control power transfer of each of the direct voltage converters based on at least a reference value ($U_{DC\_ref}$) of direct voltage ($U_{DC}$) of a second direct voltage terminal (109, 209) of the direct voltage converter and a value of the direct voltage ($U_{DC}$) of the second direct voltage terminal of the direct voltage converter, **characterized in that** the data processing system is configured to:

   - compute a target value ($V_{target}$) as a linear combination of values of direct voltages ($V_{ESS\_1}$, ..., $V_{ESS\_N}$) of the first direct voltage terminals of the direct voltage converters, and
   - form, for each of the direct voltage converters, a correction value ($V_{ref\_offset\_n}$) based on the target value ($V_{target}$) and the value of the direct voltage ($V_{ESS\_n}$) of the first direct voltage terminal of the direct voltage converter,

   wherein the data processing system is configured to control the power transfer of each of the direct voltage converters based on: the reference value ($U_{DC\_ref}$), the value of the direct voltage ($U_{DC}$) of the second direct voltage terminal, and the correction value ($V_{ref\_offset\_n}$) of the direct voltage converter to drive the direct voltages ($V_{ESS\_1}$, ..., $V_{ESS\_N}$) of the first direct voltage terminals of the direct voltage converters to a same value.

2. A control system according to claim 1, wherein the data processing system is configured to compute the target value ($V_{target}$) as an arithmetic average of the values of the direct voltages ($V_{ESS\_1}$, ..., $V_{ESS\_N}$) of the first direct voltage terminals of the direct voltage converters.

3. A control device according to claim 1, wherein the data processing system is configured to compute the target value ($V_{target}$) according to a following formula:

$$V_{target} = (1/C_{sum}) \sum_{i=1...N} (C_{ESS\_i} V_{ESS\_i}),$$

where N is a number of the direct voltage converters, $V_{target}$ is the target value, $C_{ESS\_i}$ is an energy storage capacity of the energy storage connected to $i^{th}$ one of the direct voltage converters, $C_{sum}$ is a sum of the energy storage capacities of the energy storages, and $V_{ESS\_i}$ is the value of the direct voltage of the first direct voltage terminal of the $i^{th}$ one of the direct voltage converters.

4. A control system according to any one of claims 1-3, wherein the data processing system is configured to form, for each of the direct voltage converters, the correction value ($V_{ref\_offset\_n}$) based on an auxiliary variable ($a_n$) dependent on a difference ($V_{target}$ - $V_{ESS\_N}$) between the target value ($V_{target}$) and the value of the direct voltage ($V_{ESS\_n}$) of the first direct voltage terminal of the direct voltage converter.

5. A control system according to claim 4, wherein the data processing system is configured to form the auxiliary variable ($a_n$) so that the auxiliary variable ($a_n$) is the difference ($V_{target}$ - $V_{ESS\_N}$) between the target value ($V_{target}$) and the value of the direct voltage ($V_{ESS\_n}$) of the first direct voltage terminal of the direct voltage converter if an absolute value of the difference exceeds a predetermined limit, and otherwise the auxiliary variable ($a_n$) is zero.

6. A control system according to claim 4 or 5, wherein the data processing system is configured to form, for each of the direct voltage converters, the correction value ($V_{ref\_offset\_n}$) based on a time integral of the auxiliary variable ($a_n$).

7. A control system according to claim 6, wherein the data processing system is configured to limit the time integral of the auxiliary variable ($a_n$) to be at most a predetermined upper limit value and at least a predetermined lower limit value.

8. A control system according to any one of claims 1-7, wherein the data processing system is configured to constitute, for each of the direct voltage converters, a proportional and integrative controller configured to control the power transfer of the direct voltage converter based on an error variable ($e_n$) dependent on a difference ($U_{DC\_ref}$ - ($U_{DC}$ + $V_{ref\_offset\_n}$)) between the reference value ($U_{DC\_ref}$) and a sum of the correction value ($V_{ref\_offset\_n}$) and the value of the direct voltage ($U_{DC}$) of the second direct voltage terminal of the direct voltage converter.

9. A control system according to claim 8, wherein the data processing system is configured to form a voltage droop value ($V_{droop}$) based on a time integral term of the proportional and integrative controller, and to change the error variable ($e_n$) by the voltage droop value ($V_{droop}$), the voltage droop value ($V_{droop}$) decreasing the power transfer from the first direct voltage terminal to the second direct voltage terminal when the time integral term contributes the power transfer from the first direct voltage terminal to the second direct voltage terminal.

10. A control system according to any one of claims 1-9, wherein the data processing system is configured to form, for each of the direct voltage converters, a power reference ($P_{ref}$) based on the reference value ($U_{DC\_ref}$), the value of the direct voltage ($U_{DC}$) of the second direct voltage terminal, and the correction value ($V_{ref\_offset\_n}$), and to control current of the direct voltage converter to drive the power transfer of the direct voltage converter towards the power reference.

11. An electric power system comprising:

    - energy storages (110-112, 210-212),
    - direct voltage converters (101-103, 201-203) whose first direct voltage terminals are connected to the energy storages, and
    - a control system according to any one of claims 1-10 and configured to control power transfer of each of the direct voltage converters to drive direct voltages ($V_{ESS\_1}$, ..., $V_{ESS\_N}$) of the first direct voltage terminals of the direct voltage converters to a same value.

12. An electric power system according to claim 11, wherein second direct voltage terminals of the direct voltage converters are connected to each other and thus the second direct voltage terminals of the direct voltage converters have a same voltage.

13. An electric power system according to claim 11 or 12, wherein the electric power system comprises a switching system (113-115, 213-215) suitable for connecting each of the energy storages (110-112, 210-212) to a direct voltage bus (116, 216) for charging the energy storages so that flow paths of energy from the direct voltage bus to the energy storages are free from the direct voltage converters.

**14.** An electric power system according to claim 13, wherein the switching system (113-115, 213-215) is suitable for connecting the energy storages to the direct voltage bus for charging the energy storages so that the energy storages are parallel connected when being connected to the direct voltage bus (116, 216).

**15.** A direct voltage converter (101) comprising:

- a first direct voltage terminal (104), a second direct voltage terminal (109), and a converter stage (117) between first and second direct voltage terminals,
- a driver stage (118) configured to control the converter stage, and
- a data processor (105) configured to control power transfer of the converter stage based on at least a reference value ($U_{DC\_ref}$) of direct voltage ($U_{DC}$) of the second direct voltage terminal and a value of the direct voltage ($U_{DC}$) of the second direct voltage terminal,

**characterized in that** the data processor is configured to:

- receive, from a data transfer network, first data indicative of one or more direct voltages ($V_{ESS\_2}$, ..., $V_{ESS\_N}$) related to one or more other direct voltage converters,
- transmit, to the data transfer network, second data indicative of direct voltage ($V_{ESS\_1}$) of the first direct voltage terminal,
- compute a target value ($V_{target}$) as a linear combination of the value of the direct voltage ($V_{ESS\_1}$) of the first direct voltage terminal and one or more values of the one or more direct voltages ($V_{ESS\_2}$, ..., $V_{ESS\_N}$) indicated by the second data, and
- form a correction value ($V_{ref\_offset\_1}$) based on the target value ($V_{target}$) and the direct voltage ($V_{ESS\_1}$) of the first direct voltage terminal,

wherein the data processor is configured to control the power transfer of the converter stage based on: the reference value ($U_{DC\_ref}$), the value of the direct voltage ($U_{DC}$) of the second direct voltage terminal, and the correction value ($V_{ref\_offset\_n}$) to drive the direct voltage ($V_{ESS\_1}$) of the first direct voltage terminal and the one or more direct voltages ($V_{ESS\_2}$, ..., $V_{ESS\_N}$) indicated by the second data to a same value.

**16.** A method for controlling direct voltage converters whose first direct voltage terminals are connected to energy storages, the method comprising:

- controlling (303) power transfer of each of the direct voltage converters based on at least a reference value ($U_{DC\_ref}$) of direct voltage ($U_{DC}$) of a second direct voltage terminal of the direct voltage converter and a value of the direct voltage ($U_{DC}$) of the second direct voltage terminal of the direct voltage converter,

**characterized in that** the method comprises:

- computing (301) a target value ($V_{target}$) as a linear combination of values of direct voltages ($V_{ESS\_1}$, ..., $V_{ESS\_N}$) of the first direct voltage terminals of the direct voltage converters, and
- forming (302), for each of the direct voltage converters, a correction value ($V_{ref\_offset\_n}$) based on the target value ($V_{target}$) and the value of the direct voltage ($V_{ESS\_n}$) of the first direct voltage terminal of the direct voltage converter,

wherein the power transfer of each of the direct voltage converters is controlled (303) based on: the reference value ($U_{DC\_ref}$), the value of the direct voltage ($U_{DC}$) of the second direct voltage terminal, and the correction value ($V_{ref\_offset\_n}$) of the direct voltage converter to drive the direct voltages ($V_{ESS\_1}$, ..., $V_{ESS\_N}$) of the first direct voltage terminals of the direct voltage converters to a same value.

**17.** A computer program for controlling direct voltage converters whose first direct voltage terminals are connected to energy storages, the computer program comprising computer executable instructions for controlling a programmable data processing system to:

- control power transfer of each of the direct voltage converters based on at least a reference value ($U_{DC\_ref}$) of direct voltage ($U_{DC}$) of a second direct voltage terminal of the direct voltage converter and a value of the direct voltage ($U_{DC}$) of the second direct voltage terminal of the direct voltage converter,

**characterized in that** the computer program comprises computer executable instructions for controlling the programmable data processing system to:

- compute a target value ($V_{target}$) as a linear combination of values of direct voltages ($V_{ESS\_1}$, ..., $V_{ESS\_N}$) of the first direct voltage terminals of the direct voltage converters, and
- form, for each of the direct voltage converters, a correction value ($V_{ref\_offset\_n}$) based on the target value ($V_{target}$) and the value of the direct voltage ($V_{ESS\_n}$) of the first direct voltage terminal of the direct voltage converter,

wherein the computer executable instructions for controlling the programmable data processing system to control the power transfer of each of the direct voltage converters comprises computer executable instructions for controlling the programmable data processing system to control the power transfer of each of the direct voltage converters based on: the reference value ($U_{DC\_ref}$), the value of the direct voltage ($U_{DC}$) of the second direct voltage terminal, and the correction value ($V_{ref\_offset\_n}$) of the direct voltage converter to drive the direct voltages ($V_{ESS\_1}$, ..., $V_{ESS\_N}$) of the first direct voltage terminals of the direct voltage converters to a same value.

18. A non-volatile computer readable medium encoded with a computer program according to claim 17.

Figure 1a

Figure 1b

Figure 2

START

Compute a target value as a linear combination of values of direct voltages of first direct voltage terminals of direct voltage converters.

301

Form, for each of the direct voltage converters, a correction value based on the target value and the value of the direct voltage of the first direct voltage terminal of the direct voltage converter.

302

Control power transfer of each of the direct voltage converters based on:

i) a reference value of direct voltage of a second direct voltage terminal of the direct voltage converter, ii) an actual value of the direct voltage of the second direct voltage terminal of the direct voltage converter, and iii) the correction value of the direct voltage converter to drive the direct voltages of the first direct voltage terminals of the direct voltage converters to a same value.

303

**Figure 3**

Europäisches
Patentamt

European
Patent Office

Office européen
des brevets

# EUROPEAN SEARCH REPORT

**Application Number**

EP 23 21 5072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/273235 A1 (ICHIKAWA SHINJI [JP]) 5 November 2009 (2009-11-05) * abstract; figures * * paragraphs [0008] - [0028], [0075] - [0088], [0106] - [0134] * | 1-18 | INV. H02J1/10 H02J7/00 H02M1/00 |
| A | EP 2 159 897 A1 (TOYOTA MOTOR CO LTD [JP]) 3 March 2010 (2010-03-03) * abstract; figures * | 1-18 | |
| A | EP 4 254 769 A1 (DANFOSS EDITRON OY [FI]) 4 October 2023 (2023-10-04) * abstract; figures * | 1-18 | |

TECHNICAL FIELDS
SEARCHED (IPC)

H02J
H02M

The present search report has been drawn up for all claims

| Place of search | Date of completion of the search | Examiner |
|---|---|---|
| Munich | 11 July 2024 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5072

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | | Publication date | Patent family member(s) | | Publication date |
|---|---|---|---|---|---|
| US 2009273235 | A1 | 05-11-2009 | CN | 101427453 A | 06-05-2009 |
| | | | JP | 4379430 B2 | 09-12-2009 |
| | | | JP | 2007295695 A | 08-11-2007 |
| | | | US | 2009273235 A1 | 05-11-2009 |
| | | | WO | 2007125840 A1 | 08-11-2007 |
| EP 2159897 | A1 | 03-03-2010 | CN | 101682204 A | 24-03-2010 |
| | | | EP | 2159897 A1 | 03-03-2010 |
| | | | JP | 5036416 B2 | 26-09-2012 |
| | | | JP | 2008312381 A | 25-12-2008 |
| | | | KR | 20100022109 A | 26-02-2010 |
| | | | US | 2010131137 A1 | 27-05-2010 |
| | | | WO | 2008153170 A1 | 18-12-2008 |
| EP 4254769 | A1 | 04-10-2023 | EP | 4254769 A1 | 04-10-2023 |
| | | | WO | 2023186379 A1 | 05-10-2023 |

EPO FORM P0459

For more details about this annex : see Official Journal of the European Patent Office, No. 12/82